# EUROPEAN PATENT APPLICATION

(11) **EP 1 271 044 A1**
(43) Date of publication of application: **02.01.2003**
(21) Application number: 02013482.1
(22) Date of filing: 17.06.2002
(51) Int. Cl.: F16L 59/20

(54) **Double-walled pipe structure and method of manufacturing same**

(30) Priority: 20.06.2001 GB 0114975
(71) Applicant: Corus UK Limited, London W1V 2BS (GB)
(72) Inventor: Turner, Gary, Peterlee, Co Durham SR8 2NY (GB); Summerfield, Paul, Oakham, Leicestershire LE15 9LR (GB)
(74) Representative: Downing, Michael Philip

(57) **Abstract**

The application describes a method of manufacturing a double-walled pipe structure, comprising the steps of providing a pair of inner flow pipe (114,116) and an outer sleeve pipe (122,124) around each thereof, providing an insulating material within each annular space therebetween, joining the two inner flow pipes in an end-to-end relationship with the outer sleeve pipes spaced apart, and sliding a cover section (130) into place over the gap between the sleeve pipes (122,124), the cover section (130) comprising a length of tube with a longitudinal split therealong, wherein prior to sliding, the cover section (130) is opened by enlarging the split thereby to provide an inner diameter greater than the outer diameter of the sleeve pipe (122), and after sliding the cover section is compressed such that its inner diameter is less than the outer diameter of the sleeve pipe (122). The cover section (130) can be a length of tube similar to the outer sleeve (122) pipe, but the weld gap will be minimised if the cover section (130) prior to opening is of larger diameter than the sleeve pipe (122), such as having an inside diameter greater than the outside diameter of the sleeve pipe (122). The application also refers to a double walled pipe structure comprising a pair of inner pipes (114,116) welded end to end, a pair of outer pipes (122,124) each enclosing an inner pipe (114,116) and each ending short of the join between the inner pipes (114,116), and a cover section (130) linking the outer pipes and welded at either end thereto, the cover section (130) being generally cylindrical and having a single longitudinal weld join along its length.

## Description

The present invention relates to a double-walled pipe structure, and to a method of manufacturing a double-walled pipe structure.

Double-walled pipe structures are used to transport crude oil and the like, which when extracted is at an elevated temperature. If it is allowed to cool then lower melting point fractions could solidify, and thus block the pipeline. Accordingly, the oil in sub-sea pipelines is transported in an inner "flow" pipe which is placed in an outer "sleeve" pipe. The annulus between the two is filled with an insulating material such as rockwool, silica microspheres, polyurethane foam or the like.

Double-walled pipe structures are discussed (for example) in our earlier patent application WO98/17940.

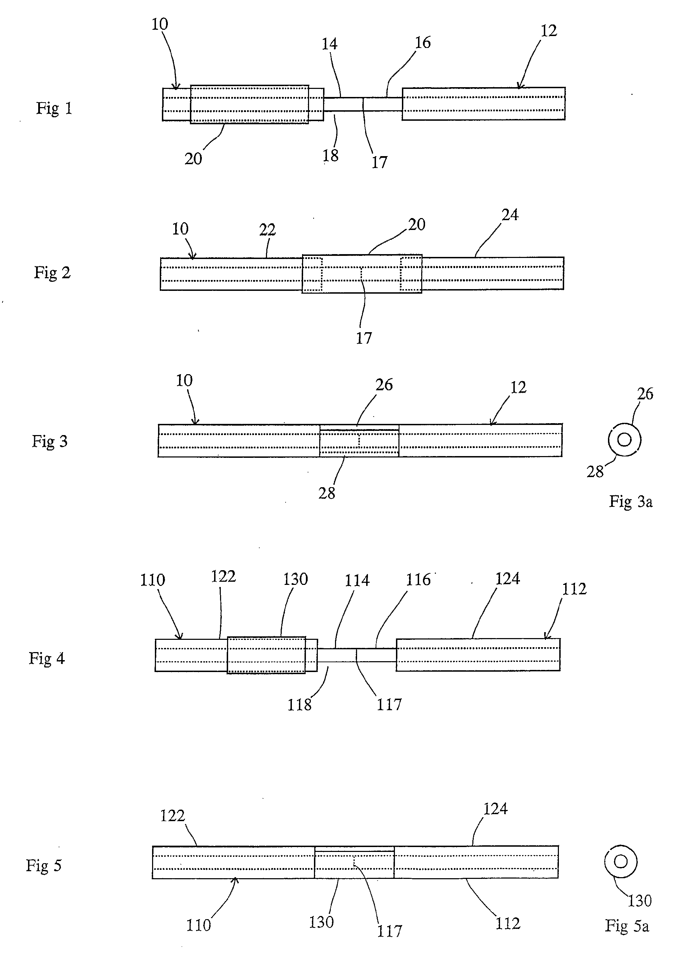

Pipe structures of this type are generally made in 12 metre sections, three of which are then welded end to end to produce a 36 metre section. These are then welded end to end in situ and laid. Both pipes (ie the inner and outer) must be joined, and typically the 12m section is formed such that the inner pipe protrudes beyond the outer sleeve pipe. Thus, two sections are brought up to each other and the inner pipes welded together. The volume around the new join is then packed with insulating material and wider gauge sleeve is passed over the outer pipe and welded in place over the join. This is shown in figures 1 and 2, where figure 1 shows a pair of 12m sections 10, 12 which have been brought together and the inner pipes 14, 16 of each welded together at 17. Insulation is placed in the space 18. As shown in figure 2, a sleeve 20 is passed over the outer pipe 22 of one section 10 until is covers the join 17. The two ends of the sleeve 20 are then welded to the respective outer pipe 22, 24 beneath it.

This arrangement unfortunately leaves a step in the external section of the pipeline, which makes handling of the 36 metre section more difficult. The step acts as a structural discontinuity which can provide stress concentration at the fabrication weld toe. In addition, there is a narrow annular clearance gap between the outside of the pipe and the inside of the sleeve. Apart from not being good engineering practice, this also provides stress concentration.

An alternative arrangement which overcomes this problem is to cover the join with two half-shells as shown in figures 3 and 3a. The two shells 26, 28 are placed either side of the join 17 and welded in place to form a cylindrical cover which can be smooth with the remainder of the pipeline 10, 12. However, this requires four welds to join the two half shells into a single cylindrical section, two circular welds at either end and two longitudinal welds on either side.

The present invention therefore provides a method of manufacturing a double-walled pipe structure comprising the steps of providing a pair of inner flow pipes, providing an outer sleeve pipe around each thereof, providing an insulating material within each annular space therebetween, joining the two inner flow pipes in an end-to-end relationship with the outer sleeve pipes spaced apart, and sliding a cover section into place over the gap between the outer sleeve pipes, the cover section comprising a length of tube with a longitudinal split therealong, wherein prior to sliding, the cover section has an inner diameter greater than the outer diameter of the sleeve pipe, and after sliding the cover section is compressed such that its inner diameter is less than the outer diameter of the sleeve pipe.

It also provides a double walled pipe structure comprising a pair of inner pipes welded end to end, a pair of outer pipes each enclosing an inner pipe and each ending short of the join between the inner pipes, and a cover section linking the outer pipes and welded at either end thereto, the cover section being generally cylindrical and having a single longitudinal weld join along its length.

The cover section can start life as a section of tube similar to the outer sleeve pipe, in which case it is likely to need expanding prior to positioning. However, to minimise the weld gap after cutting, opening and closing the cover section, it can start as a section of tube which is of larger diameter than the sleeve pipe. Typically, the inside diameter of the cover section can be greater than the outside diameter of the sleeve pipe. Then, when the cover section is compressed, the weld gap is partially or fully closed.

An embodiment of the invention will now be described by way of example with reference to the accompanying figures, in which;
Figures 1 and 2 show the steps in joining a pair of double-walled pipe structures according a first conventional method;
Figures 3 and 3a show the steps in joining a pair of double-walled pipe structures according a second conventional method, figure 3 being a view from one side and figure 3a being a transverse section through the join region of figure 3;
Figures 4, 5 and 5a show steps in joining a pair of double-walled pipe structures according to the present invention, figures 4 and 5 being views from one side and figure 5a being a transverse section through the join region of figure 5.

Figures 1, 2, 3 and 3a have been described above and will not be described further.

Referring to figures 4 and 5, an embodiment of the invention will now be described.

A pair of double-walled pipe structures 110, 112 are provided, each consisting of an inner flow pipe 114, 116 and an outer sleeve pipe 122, 124. Insulation is provided in the annular space between the pipes. In preparation for joining the structures, figure 4 shows the inner flow pipes 114, 116 joined by welding in an end-to-end relationship at 117. After welding, insulation material is packed around the join in the to-be-annular space 118.

A cover section 130 is provided around the pipe structure 110. This comprises a section of tube whose length corresponds to the gap between the outer sleeve pipes 122, 123, with a single longitudinal split therealong. After cutting the cover section in this way, it is expanded using known equipment for the purpose until it can be slid into place. Some tube sections such as SAW welded pipe have a residual hoop stress and may spring open after cutting without needing to be expanded. If the cover 130 is opened such that its inner diameter is greater than the outside diameter of the outer sleeve pipe 122 then it will be able to slide over the outside of the outer sleeve pipe 122 satisfactorily.

The cover 130 is then slid into place over the join 117 and clamped down to reduce its diameter to match the sleeve pipes 122, 124 on either side. It is then welded in place with a single longitudinal weld along the split and two circular welds joining it to the sleeve pipes 122, 124. The entire structure then has a smooth outer surface with a minimum of welds.

The cover 130 could be a section of tube of the same type used for the outer sleeve pipes 122, 124. In this case, it will require expanding prior to positioning, unless residual hoop stresses can be relied on. Alternatively, a larger diameter pipe section can be used for the cover 130 in which case less expanding or no expanding will be required. Further, after clamping a larger diameter pipe the gap which is to be welded will be narrower, giving a more sound weld.

The invention is applicable to a wide range of pipeline sizes. Typically, undersea pipelines for conveying crude oil have an outside diameter of 16, 20 or 24 inches and are of steel nominally ½ inch thick. If the outside diameter is 24 inches and the longitudinal cut removes about a ¼ inch groove of material then a cover of 24.1 inches will close down over the join to form a butt weld.

It will be appreciated that many variations can be made to the above-described embodiment without departing from the scope fo the present invention.

## Claims

1. A method of manufacturing a double-walled pipe structure comprising the steps of providing a pair of inner flow pipes, providing an outer sleeve pipe around each thereof, providing an insulating material within each annular space therebetween, joining the two inner flow pipes in an end-to-end relationship with the outer sleeve pipes spaced apart, and;
sliding a cover section into place over the gap between the outer sleeve pipes, the cover section comprising a length of tube with a longitudinal split therealong, wherein prior to sliding, the cover section has an inner diameter greater than the outer diameter of the sleeve pipe, and after sliding the cover section is compressed such that its inner diameter is less than the outer diameter of the sleeve pipe.

2. A method according to claim 1 in which the cover section is a length of tube similar to the outer sleeve pipe.

3. A method according to claim 2 in which the cover section is opened by expansion prior to positioning.

4. A method according to claim 1 in which the cover section prior to opening is of larger diameter than the sleeve pipe.

5. A method according to claim 4 in which, prior to opening, the inside diameter of the cover section is greater than the outside diameter of the sleeve pipe.

6. A double walled pipe structure comprising a pair of inner pipes welded end to end, a pair of outer pipes each enclosing an inner pipe and each ending short of the join between the inner pipes, and a cover section linking the outer pipes and welded at either end thereto, the cover section being generally cylindrical and having a single longitudinal weld join along its length.

7. A double walled pipe structure substantially as herein described with reference to and/or as illustrated in the accompanying figures 4, 5 and 5a.
